# EUROPEAN PATENT SPECIFICATION

(11) **EP 1 348 003 B1**
(45) Date of publication and mention of the grant of the patent: **08.03.2006**
(21) Application number: 01997100.1
(22) Date of filing: 26.12.2001
(51) Int. Cl.: C08G 64/14, C08G 64/30

(54) **PROCESS FOR THE PRODUCTION OF POLYCARBONATE**
VERFAHREN ZUR HERSTELLUNG VON POLYCARBONAT
PROCEDE DE PREPARATION DE POLYCARBONATE

(30) Priority: 28.12.2000 US 258708 P
(43) Date of publication of application: 01.10.2003
(73) Proprietor: GENERAL ELECTRIC COMPANY, Schenectady, NY 12345 (US)
(72) Inventor: BRACK, Hans, Peter, NL-4876 AL Etten-Leur (NL); CELLA, James, Anthony, Clifton Park, NY 12065 (US); HOEKS, Theodorus, Lambertus, NL-4613 AS Bergen op Zoom (NL); KARLIK, Dennis, NL-4611 JX Bergen op Zoom (NL); PRADA, Lina, Murcia (ES)
(74) Representative: Szary, Anne Catherine
(86) International application number: PCT/US2001/049456
(87) International publication number: WO 2002/060977

(56) References cited:
- EP-A- 0 581 074
- EP-A- 0 980 861
- US-A- 5 696 222
- PATENT ABSTRACTS OF JAPAN vol. 018, no. 485 (C-1248), 9 September 1994 (1994-09-09) & JP 06 157739 A (NIPPON G II PLAST KK), 7 June 1994 (1994-06-07) cited in the application

## Description

### FIELD OF THE INVENTION

The present invention relates to a process for the production of polycarbonate. More specifically, it relates to a process for preparing a polycarbonate whose terminal phenolic hydroxyl group is blocked or capped, and to a process for controlling the molecular weight build-up of such polycarbonate.

### BACKGROUND OF THE INVENTION

Polycarbonate is a thermoplastic that has excellent mechanical properties (e.g., impact resistance) heat resistance and transparency. Polycarbonate is widely used in many engineering applications. In certain applications, such as large sheets, it is desirable to use a polycarbonate resin with a high molecular weight, high intrinsic viscosity and lower endcap level. For other applications, such as for optical disks, it is desirable to use a polycarbonate resin with a relatively lower molecular weight, lower intrinsic viscosity and a higher endcap level.

In one typical method for producing a polycarbonate, an aromatic dihydroxy compound such as bisphenol, is reacted with a diaryl carbonate such as diphenyl carbonate. This ester exchange reaction is preferably conducted in a molten state, and is referred to as the melt-polycondensation method. It is known to use terminal blocking reagents or "end-cappers" to enhance the proportion of tenninal phenolic hydroxyl groups that are attached to monofunctional reagents (i.e., "end-capped") .

Unexamined Japanese Patent Application H6-157739 discloses the use of certain carbonates and esters, particularly diphenyl carbonate, as end-cappers.

U.S. Patent No. 5,696,222 and EP Patent No. 0 985 696 A1 disclose methods of producing polycarbonate having a high-end cap level by adding certain activated carbonate end-cappers. These end-cappers are activated by a phenolic group having an ortho chlorine atom, an ortho methoxycarbonyl or an ortho ethoxycarbonyl group. It should be noted that the use of chlorine-activated end-cappers results in the production of potentially toxic byproducts, or byproducts that produce gaseous chlorine-containing products upon combustion. Thus from the handling and environmental standpoints, there is a demand for the use of end-cappers that are free from chlorine-activating groups. These patents also disclose that the end-cappers are added to the process after the polycarbonate formed has an intrinsic viscosity of at least 0.3 dl/g, to form a polycarbonate with increased end-cap levels minimal changes in molecular weight or intrinsic viscosity, i.e., an intrinsic viscosity that is greater or smaller than the viscosity of the polycarbonate formed before the addition of the end-cappers by at most 0.1 dl/g. It should be noted that it is desirable to be able to simultaneously increase both end-cap level and molecular weight or intrinsic viscosity in the case of some polycarbonate resins, e.g., high molecular weight or intrinsic viscosity sheet polycarbonate, or in some reactor systems, e.g. continuous or semi-continuous types.

EP 0 980 861A1 discloses the use of certain salicylic acid ester derivatives as a terminal blocking agents in amounts of 0.1 to 10 times, and most preferably 0.5 to 2 times, mole per mole equivalent of terminal hydroxyl groups of the polycarbonate formed at a time of the addition. Such polycarbonates have good color tone suitable for optical material use. It is disclosed that these end-cappers are activated by a phenolic group having an ortho methoxycarbonyl or ethoxycarbonyl group. It should be noted that the Examples of EP 0 980 861A1 teach the use of 2-methoxycarbonylphenyl-phenylcarbonate as an end-capper in an amount that is about 1 mole per mole equivalent of terminal hydroxyl groups to form a polycarbonate with increased end-cap levels.

There is still a need for an improved melt process to produce polycarbonate having capped terminals and controlled molecular weight.

### SUMMARY OF THE INVENTION

The invention relates to a process for the production of polycarbonate, the process comprising adding a terminal blocking agent of the formula (1): 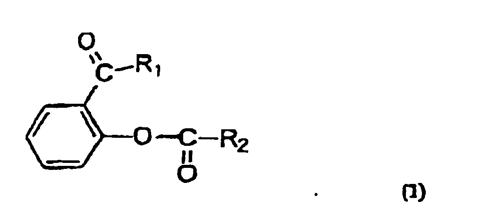
wherein R₁ is phenyl, phenoxy, benzyl or benzoxy; and R₂ is a C₁-C₃₀ alkyl group, C₁-C₃₀ alkoxy group, C₆-C₃₀ aryl group, C₆₋C₃₀ aryloxy group, C₇-C₃₀ aralkyl, or C₆-C₃₀ arylalkyloxy group, and
wherein the terminal blocking agent is added to the polycarbonate oligomer in a stoichiometric amount of about 0.1 to 6.5 relative to the free OH content of the polycarbonate oligomer and after the oligomer has reached a number-average molecular weight of about 2,000 to 15,000 Dalton, and
wherein said polycarbonate oligomer has a final intrinsic viscosity that is greater or smaller by at least 0.1 dl/g and an increased end-cap level of at least 20% compared to the polycarbonate formed before the addition of the terminal blocking agent.

In one embodiment of the invention, R₁ is selected from the group consisting of benzoxy and phenoxy groups and R₂ is selected from the group consisting of phenyl, para-t-butyl-phenyl, phenoxy, para-tert-butylphenoxy, para-nonylphenoxy, para-dodecylphenoxy, 3-(n-pentadecyl)phenoxy, and para-cumylphenoxy.

### DETAILED DESCRIPTION OF THE INVENTION

Applicants have surprisingly found in the process of the present invention that, by adding a relatively small amount of the end-capper or terminal blocking agent of the invention (note these terms are used simultaneously throughout the specification), the end-capper rapidly caps or blocks the terminal OH groups of the melt polycarbonate for a controlled build-up of the molecular weight of the polycarbonate oligomer. We have also found that one can control the molecular weight build-up in the production of polycarbonate by controlling the stoichiometry of the end-capper of the present invention.

End-capping agent / MW Builder: In the process of the present invention, the compound of the following formula is added to a polycarbonate oligomer as an end-capper or terminal blocking agent and to control the molecular weight of the polycarbonate oligomer: 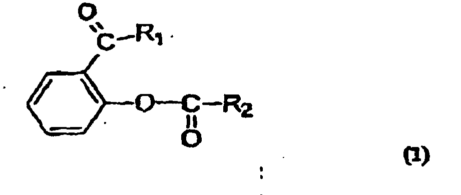
wherein R₁ is phenyl, phenol, benzyl or benzoxy. In one embodiment, R₁ is selected from the group consisting of benzoxy and phenoxy groups. In another embodiment, R₁ is benzoxy R₂ is a C₁-C₃₀ alkyl group, C₁-C₃₀ alkoxy group, C₆-C₃₀ aryl group, C₇-C₃₀ aralkyl, or C₆-C₃₀ aryloxy group.

In one embodiment, R₂ is selected from the group consisting of phenyl, para-t-butyl-phenyl, phenoxy, para-tert-butylphenoxy, para-nonylphenoxy, 3-(n-pentadecyl)phenoxy, and para-cumylphenoxy.

In a third embodiment of the invention, the end-capper is selected from the group yielding higher melting point ortho-substituted phenols such as benzyl or phenyl salicylate (melting point "mp" of 24 and 44-46 °C, respectively) or 2-hydroxybenzophenone (mp = 37-39 °C).

Preparation of the end-capper In one embodiment of the invention, the end-capper is prepared by the reaction of appropriate chloroformates (e.g., phenyl chloroformate or *p*-cumylphenyl chloroformate) with one equivalent of an activated phenol, such as propyl salicylate, in a solvent such as methylene chloride in the presence of a base to neutralize the liberated HCl. Additional catalysts may be employed in this reaction to facilitate the condensation reaction. After completion of the condensation reaction, the product solution is washed with aqueous acid, base, then with water until the washings are neutral. The organic solvent may be removed by distillation and the end-capper is crystallized or distilled and recovered.

The condensation reaction to prepare the end-capper of the present invention may be carried out under anhydrous conditions known in the art using one or more equivalents of a tertiary amine per equivalent of chlorofonnate as the base, or under interfacial conditions also well-known in the art using aqueous sodium hydroxide as the base in the presence of a condensation catalyst. In one embodiment, the condensation catalyst is triethyl amine, quaternary alkyl ammonium salt, or mixtures thereof.

Terminal Blocking Reaction in the Polycarbonate Production Process: The terminal blocking agent of the present invention is used to rapidly cap or block the terminal hydroxy group ( 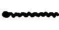 OH) of the polycarbonate to block the terminus of the polycarbonate as shown below:

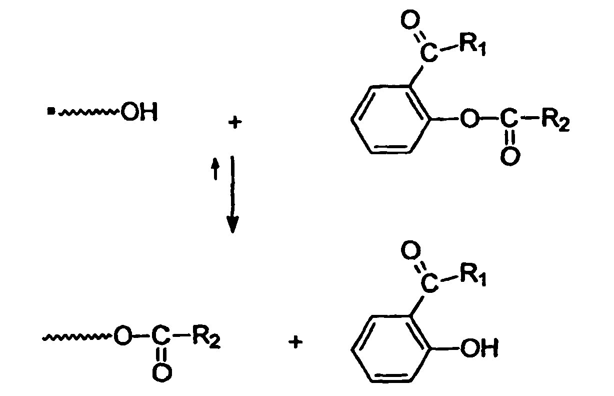

The ortho-substituted phenols generated in the reaction of the formula shown below are thought to be less reactive than phenol in backbiting reactions, which lead to molecular weight degradation of the polycarbonate. The by-product phenols are removed by distillation to the over-head system using conventional means (i.e., freeze traps using chilled water as a coolant) where they can be condensed and solidified to expedite the terminal blocking at high yields.

In one embodiment, the ortho-substituted phenol by-product is recovered from the overhead system and reused to prepare new end-cappers or terminating agents.

Melt Polycarbonate Process The process of the present invention is a melt or transesterification process. The production of polycarbonates by transesterification is well-known in the art and described, for example, in Organic Polymer Chemistry by K. J. Saunders, 1973, Chapman and Hall Ltd., as well as in a number of U.S. patents, including U.S. Pat. Nos. 3,442,854; 5,026,817; 5,097,002; 5,142,018; 5,151,491; and 5,340,905.

In the melt process, polycarbonate is produced by the melt polycondensation of aromatic dihydroxy compounds (A) and carbonic acid diesters (B). The reaction can be carried out by either a batch mode or a continuous mode. The apparatus in which the reaction is carried out can be any suitable type of tank, tube, or column. The continuous processes usually involve the use of one or more CSTR's and one or more finishing reactors.

Examples of the aromatic dihydroxy compounds (A) include bis(hydroxyaryl) alkanes such as bis(4-hydroxyphenyl)methane; 1,1-bis(4-hydroxyphenyl)ethane; 2,2-bis(4-hydroxyphenyl)propane (also known as bisphenol A); 2,2-bis(4-hydroxyphenyl)butane; 2,2-bis(4-hydroxyphenyl)octane; bis(4-hydroxyphenyl)phenylmethane; 2,2-bis(4-hydroxy-1-methylphenyl)propane; 1,1-bis(4-hydroxy-t-butylphenyl) propane; and 2,2-bis(4-hydroxy-3-bromophenyl)propane; bis(hydroxyaryl)cycloalkanes such as 1,1-(4-hydroxyphenyl)cyclopentane and 1,1-bis(4-hydroxyphenyl)cyclohexane; dihydroxyaryl ethers such as 4,4'-dihydroxydiphenyl ether and 4,4'dihydroxy-3,3'-dimethylphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone. In one embodiment, the aromatic dihydroxy compound is bisphenol A (BPA).

Examples of the carbonic acid diesters (B) include diphenyl carbonate; ditolyl carbonate; bis(chlorophenyl)carbonate; m-cresyl carbonnate; dinaphthyl carbonate; bis(diphenyl) carbonate; diethyl carbonate; dimethyl carbonate; dibutyl carbonate; and dicyclohexyl carbonate. In one embodiment of an industrial process, diphenyl carbonate (DPC) is used .

In one embodiment of the invention, the terminal blocking agent of the present invention is added-together with DPC or another diaryl carbonate.
The carbonic diester component may also contain a minor amount, e.g., up to about 50 mole % of a dicarboxylic acid or its ester, such as terephthalic acid or diphenyl isophthalate, to prepare polyesterpolycarbonates.
In preparing the polycarbonates, usually about 1.0 mole to about 1.30 moles of carbonic diester are utilized for every 1 mole of the aromatic dihydroxy compound. In one embodiment, about 1.01 moles to about 1.20 moles of the carbonic diester is utilized.

*Optional Terminators* / *End-capping Agents.* In one embodiment of the melt process, additional / optional terminators or end-capping agents of the prior art may also be used. Examples of terminators include phenol, p-tert-butylphenol, p-cumylphenol, octylphenol, nonylphenol and other endcapping agents well-known in the art.

*Optional Branching Agents.* In one embodiment of the process of the present invention, branching agents are used as needed. Branching agents are well-known and may comprise polyfunctional organic compounds containing at least three functional groups, which may be hydroxyl, carboxyl, carboxylic anhydride, and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha,alpha-dimethyl benzyl)phenol, trimesic acid and benzophenone tetracarboxylic acid

*Optional Coupling Agent.* In one embodiment of the process of the present invention, a coupling agent such as a bis-alkylsalicyl carbonate, e.g., bis-methyl or ethyl or propyl salicyl carbonate, bis-phenyl or benzyl salicyl carbonate, bis(2-benzoylphenyl) carbonate, BPA-bis-2-alkoxyphenylcarbonate, BPA-bis-2-aryloxyphenylcarbonate, or BPA-bis-2-benzoylphenylcarbonate is used in conjunction with the end-capper in order to obtain a faster and / or greater build in molecular weight in the polycarbonate oligomer.

*Optional catalysts.* The polycarbonate synthesis may be conducted in the presence of a catalyst to promote the transesterification reaction. Examples include alkali metals and alkaline earth metals by themselves or as oxides, hydroxides, amide compounds, alcoholates, and phenolates, basic metal oxides such as ZnO, PbO, and Sb₂O₃, organotitanium compounds, soluble manganese compounds, nitrogen-containing basic compounds and acetates of calcium, magnesium, zinc, lead, tin, manganese, cadmium, and cobalt, and compound catalyst systems such as a nitrogen-containing basic compound and a boron compound, a nitrogen-containing basic compound and an alkali (alkaline earth) metal compound, and a nitrogen-containing basic compound, an alkali (alkaline earth) metal compound, and a boron compound.

In one embodiment of the invention, the transesterification catalyst is a quaternary ammonium compound or a quaternary phosphonium compound. Non-limiting examples of these compounds include tetramethyl ammonium hydroxide, tetramethyl ammonium acetate, tetramethyl ammonium fluoride, tetramethyl ammonium tetraphenyl borate, tetraphenyl phosphonium fluoride, tetraphenyl phosphonium tetraphenyl borate, tetrabutyl phosphonium hydroxide, tetrabutyl phosphonium acetate and dimethyl diphenyl ammonium hydroxide.
The above-mentioned catalysts may each be used by themselves, or, depending on the intended use, two or more types may be used in combination. When more than one catalyst is employed, each may be incorporated into the melt at a different stage of the reaction. In one embodiment of the invention, part or all of one catalyst is added together with the end-capper.

The appropriate level of catalyst will depend in part on how many catalysts are being employed, e.g., one or two. In general, the total amount of catalyst is usually in the range of about 1 x 10⁻⁸ to about 1.0 mole per mole of the dihydroxy compound. In one embodiment, the level is in the range of about 1 x10⁻⁵ to about 5 x 10⁻² mole per mole of dihydroxy compound. When more than one catalyst is employed, each may be incorporated into the melt at a different stage of the reaction.

*Other optional components in the polycarborrate* In the present invention, the polycarbonate obtained may further contain at least one of a heat stabilizer, an ultraviolet absorbent, a mold releasing agent, a colorant, an anti-static agent, a lubricant, an anti-fogging agent, a natural oil, a synthetic oil, a wax, an organic filler and an inorganic filler, which are generally used in the art.

Adding the terminal blocking agent to the melt process The method of adding the end-capper of the present invention to polycarbonate is not specially limited. For example, the end-capper may be added to the polycarbonate as a reaction product in a batch reactor or a continuous reactor system. In one embodiment, the end-capper is added to the melt polycarbonate just before a later reactor, i.e., a polymerizer, in a continuous reactor system. In a second embodiment, the end-capper is added between the 2^{nd} reactor and the 1^{st} polymerizer in a continuous reactor system. In another embodiment, it is added between the 1^{st} and 2^{nd} polymerizer in a continuous reactor system.

The terminal blocking agent is added at a stoichiometric ratio of about between 0.1 and 6.5 relative to the free OH content of the polycarbonate oligomer to which it is added. In one embodiment, it is added at a ratio of about 0.2 to 0.7. In another embodiment, it is added at a ratio of about of 0.4 to 0.7. In yet a third embodiment, it is added in a ratio of 0.8 to 1.5 relative to the free OH that would be obtained in the final targeted molecular weight of the polycarbonate and no other end-capper is used.

In one embodiment of the invention, the end-capper is used as a molecular weight decreasing agent when it is added before or within the polymerizing section or before the extruder in order to reduce the final targeted molecular weight of the polycarbonate without reducing the end-cap level or increasing the free OH levels of the polycarbonate product. In another embodiment the molecular weight decreasing agent is added at a stoichiometric ratio of about between 2 and 6.5 relative to the free OH content of the polycarbonate oligomer to which it is added. In a third embodiment, it is added at a ratio of about 3 to 6.

The apparatus / method for feeding the end-capper is not specially limited. The end-capper may be added in the form of a solid, a liquid, a melt or a solution thereof. Further, the end-capper may be added in a predetermined amount once, or it may be separated into predetermined amounts and added several times. In one embodiment, it is added to the process by means of a static mixer.

EXAMPLES The present invention will be explained hereinafter with reference to Examples, but the present invention is broader than, and is not be limited by the Examples. In the Examples, the following measurements were made.
a) Molecular weight: Mw and Mn were measured by GPC analysis of 1 mg/ml polymer solutions in methylene chloride versus polystyrene standards.
b) Free-OH content was measured by UV / Visible spectrometry analysis of the complexes formed from the polymer with TiCl₄ in methylene chloride solution. In some cases the Free OH content was measured by a direct UV method.
c) End-cap levels were calculated from the free OH content and Mn values.
d) Intrinsic viscosities (IV) were calculated using the empirically determined relationship: IV = (A * Mn) + B, where A = 5x10⁻⁵, B = -0.0179.

*Starting Material Polycarbonate* The following starting polycarbonate grade A or B was used in some of the examples. The starting materials were prepared by a melt process in a continuous reactor system with the following properties:

| | Polycarbonate A | Polycarbonate B | Polycarbonate C |
|---|---|---|---|
| Weight-average molecular weight Mw: | 8.11 * 10³ g/mole | 18.3 * 10³g/mole | 22.9 * 10³ g/mole |
| Number-average molecular weight Mn: | 4.05 * 10³ g/mole | 8.34* 10³ g/mole | 10.1 * 10³ g/mole |
| Free OH content: | 4020 ppm | 670 ppm | 1016 ppm |
| End-cap ratio | 52.1% | 83.6 % | 69.8% |
| Residuals: | 100 ppm | 100 ppm | 100 ppm |
| Starting intrinsic viscosity IV | 0.185 dl/g | 0.358 dl/g | 0.487 dl/g |

*Examples 1-3:* In examples 1-3, a batch reactor tube was charged under nitrogen with varying amounts between 25 - 50g of the starting polycarbonate and between 0.1952 g (5.0 * 10⁻⁴ mole or 0.085 mole end-capper per mole of -OH group) to 0.5856 g (1.5 * 10⁻³ mole or 0.254 mole end-capper per mole of -OH group) of the end-capper Methyl Salicyl *p*-Cumyl Phenyl Carbonate (MSpCPC) of the following formula:

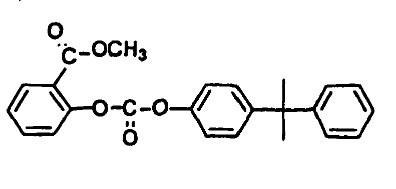

The mixture was heated to a temperature of 300 °C and stirred for 20 minutes. After the melt mixing stage, vacuum was applied to the system to a pressure of 0.5 mbar and the reaction continued for 60 minutes. After the reaction stage, the polymer was sampled from the reaction tube for number and weight average molecular weight. The results are shown in table 1.

*Example 4 - 7:* The same conditions as in examples 1-4 (2.794 * 10⁻³ mole of end-capper or 0.236 mole end-capper per mole of -OH group) except that: a) Benzyl Salicyl Phenyl Carbonate (BSPC), Phenyl Salicyl Phenyl Carbonate (PSPC), Methyl Salicyl Phenyl Carbonate (MSPC), and n-Propyl Salicyl Phenyl Carbonate (PrSPC) of the following formulae were used as the end-capper for examples 5, 6, and 7 respectively, and b) the reaction continued under vacuum for 20 minutes rather than 60 minutes. The results are also shown in table 1.

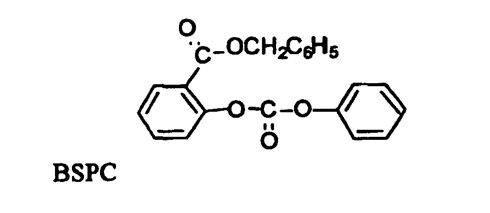

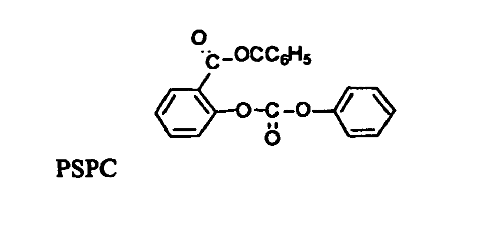

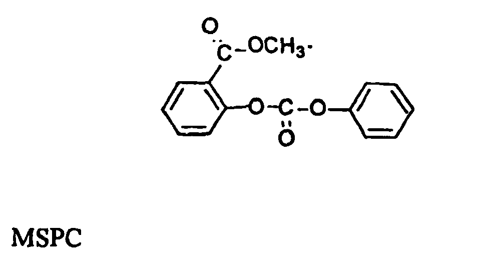

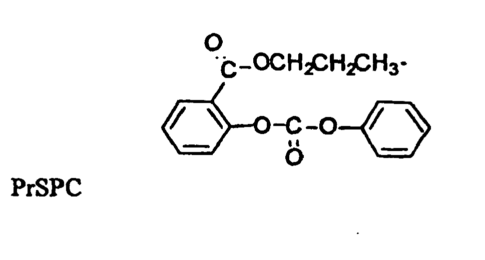

*Comparative Example 1:* Example 1 was repeated with a reaction time of 60 minutes except that no end-capper was used. The results are in table 1.

*Comparative Example 2:* Example 4 was repeated with a reaction time of 20 minutes except that no end-capper was used. The results are also in table 1.

*Example 8.* Example 1 was repeated with a reaction time of 60 minutes and with 50g polycarbonate B as the starting material and 0.3753 g (1.250* 10-3 mole) of n-Propyl Salicyl Phenyl Carbonate as the end-capper together with additional catalyst in the form of 100 ul of NaOH_{(aq)} (10x5 x 10⁻⁷ mol NaOH/mol BPA).

*Comparative Example 3.* A repeat of Example 8 except that no end-capper was used.

*Examples 9 - 10.* Example 1 was repeated with a reaction time of 10 minutes and with 25g polycarbonate C as the starting material and 1.25 and 2.50 g (4.59*10-3 and 9.18*10-3 mole) of Methyl Salicyl Phenyl Carbonate as the end-capper. The results are also in table 1.

*Comparative Example 4.* A repeat of Example 9 except that 0.448 g (1.65*10-3 mole) of Methyl Salicyl Phenyl Carbonate was used for Examples 9 and 10 respectively. The results are also in table 1.

*Comparative Example 5.* A repeat of Example 9 except that no end-capper was used. The results are also in table 1.

*Examples 11 - 12.* In these two examples, a continuous reaction system was used. The apparatus consists of pre-polymerization tanks and horizontally agitated polymerization tank. Bisphenol A and diphenyl carbonate in a molar ratio of 1.08:1 were continuously supplied to a heated agitation tank where a uniform solution was produced. About 250 eq (2.5* 10⁻⁴ mol/mol bisphenol A) tetramethylammonium hydroxide and 1 eq (1.10⁻⁶ mol/mol bisphenol A) ofNaOH were added to the solution as catalysts. The solution was then successively supplied to the pre-polymerization tanks and horizontally agitated polymerization tanks, arranged in sequence, and the polycondensation was allowed to proceed to produce a starting polymer "C" for Examples 9-10 with a Mw of 8759+199 g/mol and an Mn of 4710+106 g/mol, an endcap level of about 50%, and with an intrinsic viscosity IV of about 0.218 dl/g.

For example 11, Methyl Salicyl Phenyl Carbonate (MSPC) was added by means of a heated static mixer to the molten polymer outlet stream of the pre-polymerization tanks (inlet stream of the horizontally agitated polymerization tanks) in an amount of 1.95 mass % relative to the molten polymer stream. In example 12, the end-capper is n-Propyl Salicyl Phenyl Carbonate which was fed in an amount of about 2.15 mass % relative to the molten polymer stream.

*Comparative Example 6.* A repeat of Example 11 except that no end-capper was used.

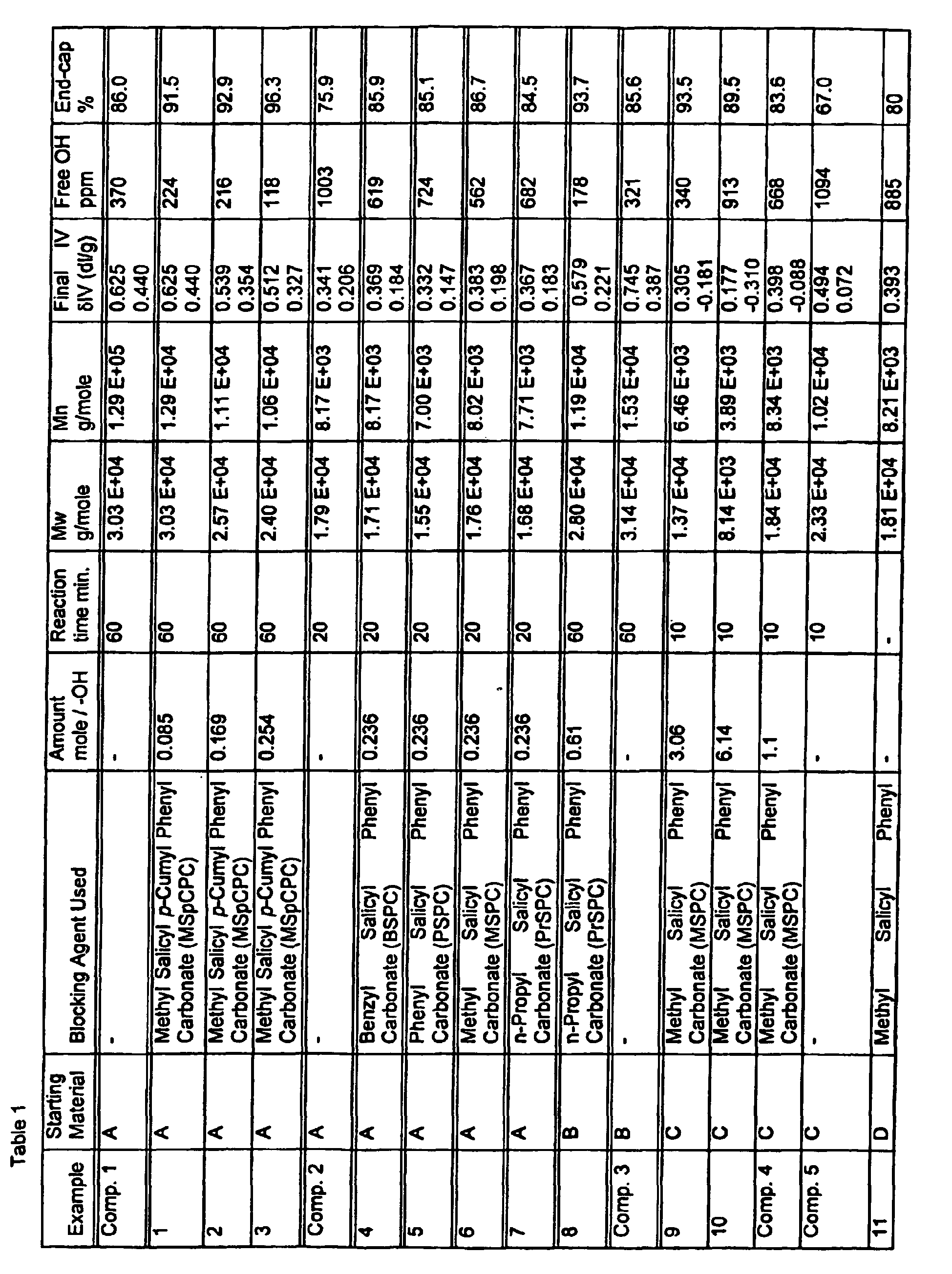

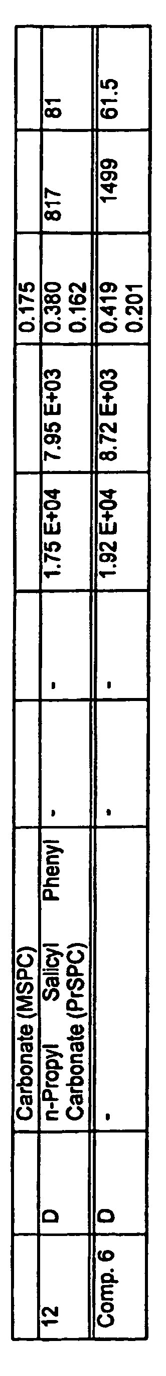

## Claims

1. A process for the production of an aromatic polycarbonate, the process comprising adding to a polycarbonate oligomeric reaction mixture under melt conditions, which mixture comprises polycarbonate oligomer having free terminal-OH groups, a sufficient amount of a terminal blocking agent of the following formula for capping the free terminal -OH groups of the polycarbonate: 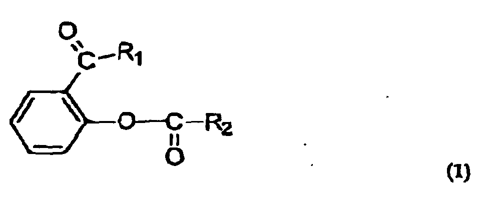
to form a polycarbonate having a final intrinsic viscosity that is greater or smaller by at least 0.1dl/g compared to the viscosity of the polycarbonate oligomer formed before the addition of the terminal blocking agent, wherein the final end-cap level of the polycarbonate is at least about 20 % higher compared to the end cap level of the polycarbonate oligomer formed before the addition of the terminal blocking agent,
wherein R₁ is phenyl, phenoxy, benzyl or benzoxy; and R₂ is a C₁-C₃₀ alkyl group, C₁-C₃₀ alkoxy group, C₆-C₃₀ aryl group, C₆₋C₃₀ aryloxy group, C₇-C₃₀ aralkyl, or C₆-C₃₀ arylalkyloxy group, and
wherein at least 80% by weight of the total amount of the terminal blocking agent added to the mixture is added and after the polycarbonate oligomer has reached a number-average molecular weight Mn of about 2,500 to 15,000 Dalton.

2. The process of claim 1, wherein R₁ is selected from the group consisting of benzoxy and phenoxy groups and R₂ is selected from the group consisting of phenyl, para-t-butyl-phenyl, phenoxy, para-tert-butylphenoxy; para-nonylphenoxy, para-dodecylphenoxy, 3-(n-pentadecyl)phenoxy, and para-cumylphenuxy.

3. The process according to claim 1, wherein the terminal blocking agent is added in an amount of about 0.1 to 6.5 mole based on 1 mole equivalent of the free terminal -OH groups of the polycarbonate at the time of the addition.

4. The process according to claim 1, further comprising adding to the polycarbonate under melt conditions a coupling agent select from the group consisting of: bis-alkylsalicyl carbonate, bis(2 benzoylphenyl) carbonate, BPA-bis-2-alkoxyphenylcarbonate, HPA-bis-2-aryloocyphenylcarbonate, BPA-bis-2-benzoylpheaylcarbonate and mixtures thereof.

5. The process according to claim 1, wherein the terminal blocking agent is added in a molar ratio of about 2 to 6.5 relative to the free -OH content of the polycarbonate oligomer at the time of first addition of the blocking agent, to decrease the intrinsic viscosity of the polycarbonate by at least 0.1 dl/g.

6. A process for the production of an aromatic polycarbonate, the process comprising adding to a polycarbonate oligomeric reaction mixture under melt conditions, which mixture comprises polycarbonate oligomer, a terminal blocking agent of the formula (1): 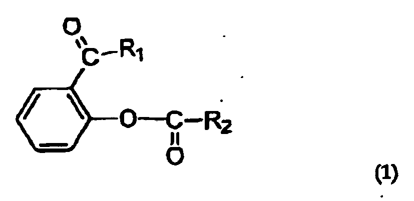
wherein R₁ is phenyl, phenoxy, benzyl or benzoxy; and R₂ is a C₁-C₃₀ alkyl group, C₁-C₃₀ alkoxy group, C₆-C₃₀ aryl group, C₇₋C₃₀ aralkyl, or C₆-C₃₀ aryloxy group,
wherein the terminal blocking agent is added to the polycarbonate oligomer in a stoichiometric amount of about 0.1 to 6.5 relative to the free OH, and wherein the terminal blocking agent is added to the polycarbonate oligomer in a stoichiometric amount of 0.1 to 1.5 relative to the free OH content of the polycarbonate oligomer, and wherein at least 80% by weight of the total amount of the terminal blocking agent is added to the mixture after the polycarbonate oligomer has reached a number-average molecular weight Mn of about 2,500 to 15,000 Dalton.

7. The process according to claim 1, wherein the terminal blocking agent is added to the polycarbonate in a reactor system of the continuous or semi-continuous type.

8. The process according to claim 7, wherein the reactor system consists of two or more reactors in series.

9. The process according to claim 7, wherein the terminal blocking agent is added to the polycarbonate using a static mixer.

10. The process according to claim 1, wherein the terminal blocking agent is added to the polycarbonate together with at least a base catalyst.

## Revendications

1. Procédé de production d'un polycarbonate aromatique, qui comprend l'addition à un mélange réactionnel à base de polycarbonate oligomère, à l'état fondu, comprenant un polycarbonate oligomère ayant des groupes terminaux libres -OH, d'une quantité suffisante pour coiffer les groupes terminaux-libres -OH du polycarbonate, d'un agent de blocage terminal de formule : 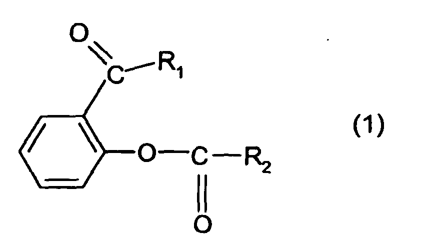
dans laquelle R₁ représente un groupe phényle, phénoxy, benzyle ou benzyloxy, et R₂ représente un groupe alkyle en C₁ à C₃₀, un groupe alcoxy en C₁ à C₃₀, un groupe aryle en C₆ à C₃₀, un groupe aryloxy en C₆ à C₃₀, un groupe aralkyle en C₇ à C₃₀ ou un groupe arylalkyloxy en C₆ à C₃₀,
pour former un polycarbonate ayant une viscosité intrinsèque finale supérieure ou inférieure d'au moins 0,1 dl/g à celle du polycarbonate oligomère formé avant l'addition de l'agent de blocage terminal, le niveau final de coiffage terminal du polycarbonate étant supérieur d'au moins environ 20 % au niveau de coiffage terminal du polycarbonate oligomère formé avant l'addition de l'agent de blocage terminal,
au moins 80 % en poids de la quantité totale de l'agent de blocage terminal ajoutée au mélange étant ajoutée après que le polycarbonate oligomère a atteint une masse moléculaire moyenne en nombre Mₙ d'environ 2500 à environ 15 000 Dalton.

2. Procédé selon la revendication 1, dans lequel R₁ représente un groupe benzyloxy ou phénoxy, et R₂ représente un groupe phényle, para-t-butylphényle, phénoxy, para-tert-butylphénoxy, para-nonylphénoxy, para-dodécylphénoxy, 3-(n-pentadécyl)phénoxy ou para-cumylphénoxy.

3. Procédé selon la revendication 1, dans lequel on ajoute l'agent de blocage terminal, au moment de l'addition, en une proportion d'environ 0,1 à 6,5 moles pour un équivalent molaire des groupes terminaux libres -OH du polycarbonate.

4. Procédé selon la revendication 1, qui comprend en outre l'addition au polycarbonate à l'état fondu d'un agent de couplage choisi parmi le carbonate de bis(salicylate d'alkyle), le carbonate de bis(2-benzoylphényle), le bis(2-alcoxyphénylcarbonate) de BPA, le bis(2-aryloxyphénylcarbonate) de BPA, le bis(2-benzoylphénylcarbonate) de BPA et leurs mélanges.

5. Procédé selon la revendication 1, dans lequel, au moment de la première addition de l'agent de blocage, on ajoute l'agent de blocage terminal selon un rapport molaire d'environ 2 à environ 6,5 par rapport à la teneur en -OH libre du polycarbonate oligomère, pour abaisser la viscosité intrinsèque du polycarbonate d'au moins 0,1 dl/g.

6. Procédé de production d'un polycarbonate aromatique, qui comprend l'addition à un mélange réactionnel à base de polycarbonate oligomère, à l'état fondu, comprenant un polycarbonate oligomère, d'un agent de blocage terminal de formule (1) : 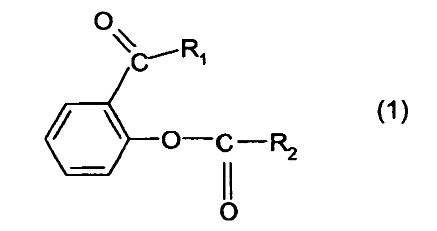
dans laquelle R₁ représente un groupe phényle, phénoxy, benzyle ou benzyloxy, et R₂ représente un groupe alkyle en C₁ à C₃₀, un groupe alcoxy en C₁ à C₃₀, un groupe aryle en C₆ à C₃₀, un groupe aralkyle en C₇ à C₃₀ ou un groupe aryloxy en C₆ à C₃₀,
l'agent de blocage terminal étant ajouté au polycarbonate oligomère en une quantité stoechiométrique allant d'environ 0,1 à environ 6,5 par rapport aux groupes libres OH, et l'agent de blocage terminal étant ajouté au polycarbonate oligomère en une quantité stoechiométrique de 0,1 à 1,5 par rapport à la teneur en OH libres du polycarbonate oligomère, et au moins 80 % en poids de la quantité totale de l'agent de blocage terminal étant ajouté au mélange après que le polycarbonate oligomère a atteint une masse moléculaire moyenne en nombre Mₙ d'environ 2500 à environ 15 000 Dalton.

7. Procédé selon la revendication 1, dans lequel on ajoute l'agent de blocage terminal au polycarbonate dans un système de réaction fonctionnant de manière continue ou semi-continue.

8. Procédé selon la revendication 7, dans lequel le système de réaction est constitué de deux ou plus de deux réacteurs en série.

9. Procédé selon la revendication 7, dans lequel on ajoute l'agent de blocage terminal au polycarbonate en utilisant un mélangeur statique.

10. Procédé selon la revendication 1, dans lequel on ajoute l'agent de blocage terminal au polycarbonate en même temps qu'au moins un catalyseur de base.

## Patentansprüche

1. Ein Verfahren zur Herstellung eines aromatischen Polycarbonats, bei welchem Verfahren man zu einer oligomeren Polycarbonatreaktionsmischung unter Schmelzbedingungen, wobei die Mischung Polycarbonatoligomere mit freien endständigen OH-Gruppen umfasst, eine ausreichende Menge eines terminalen Blockmittels der nachfolgenden Formel zur Deckelung der freien endständigen OH-Gurppen des Polycarbonats: 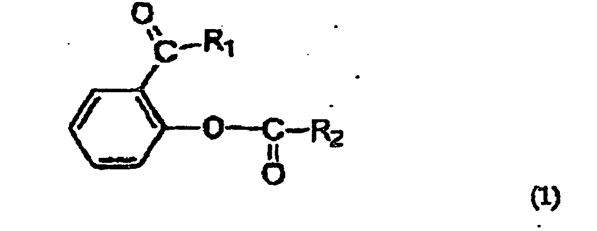
zur Bildung eines Polycarbonats zufügt, das eine endgültige Grenzviskositätszahl hat, die um wenigstens 0,1 dl/g größer oder kleiner ist verglichen mit der Viskosität des Polycarbonatoligomers, das vor der Zugabe des terminalen Blockmittels gebildet wurde, wobei der endgültige Grad der Deckelung der Enden des Polycarbonats wenigstens 20 % höher ist verglichen mit dem Grad der Deckelung des Endes des Polycarbonatoligomers, das vor der Zugabe des terminalen Blockmittels gebildet wurde,
wobei R₁ Phenyl, Phenoxy, Benzyl oder Benzoxy ist; und R₂ eine C₁-C₃₀ Alkylgruppe ist, C₁-C₃₀ Alkoxygruppe, C₆-C₃₀ Arylgruppe, C₆-C₃₀ Aryloxygruppe, C₇-C₃₀ Alkyl- oder C₆-C₃₀ Arylaklyoxygruppe, und
wobei wenigstens 80 Gew.-% des Gesamtgehaltes des terminalen Blockmittels, das der Mischung zugefügt wurde, zugefügt wird und nachdem das Polycarbonatoligomer ein Zahlenmittel des Molekulargewichts Mn von etwa 2.500 bis 15.000 Dalton erreicht hat.

2. Verfahren nach Anspruch 1, **dadurch gekennzeichnet, dass** R₁ ausgewählt ist aus der Gruppe bestehend aus Benzoxy- und Phenoxygruppen und R₂ ausgewählt ist aus der Gruppe bestehend aus Phenyl, para-t-Butylphenyl, Phenoxy, para-tert-Butylphenoxy; para-Nonylphenoxy, para-Dodecylphenoxy, 3-(n-Pentadecyl)phenoxy und para-Cumylphenoxy.

3. Verfahren nach Anspruch 1, **dadurch gekennzeichnet, dass** das terminale Blockmittel in einer Menge von etwa 0,1 bis 6,5 mol zugegeben wird bezogen auf 1 mol Äquivalent der freien endständigen OH-Gruppen des Polycarbonats zur Zeit der Zugabe.

4. Verfahren gemäß Anspruch 1, weiterhin aufweisend, dass man dem Polycarbonat unter Schmelzbedingungen ein Kopplungsmittel zusetzt ausgewählt aus der Gruppe bestehend aus: bis-Alkylsalicylcarbonat, bis(2-Benzoylphenyl)carbonat, BPA-bis-1-Alkoxyphenylcarbonat, BPA-bis-2-Aryloxyphenylcarbonat, BPA-bis-2-Benzoylphenylcarbonat und Mischungen davon.

5. Verfahren nach Anspruch 1, **dadurch gekennzeichnet, dass** das terminale Blockmittel in einem molaren Verhältnis von etwa 2 zu 6,5 zugefügt wird relative zum Gehalt an freiem OH des Polycarbonatoligomers zur Zeit der ersten Zugabe des Blockmittels, um die Grenzviskositätszahl des Polycarbonats um wenigsten 0,1 dl/g zu senken.

6. Verfahren zur Herstellung eines aromatischen Polycarbonats, bei welchem Verfahren man einer oligomeren Polycarbonatreaktionsmischung unter Schmelzbedingungen, wobei die Mischung Polycarbonatoligomer umfasst, ein terminales Blockmittel der Formel (1) zufügt: 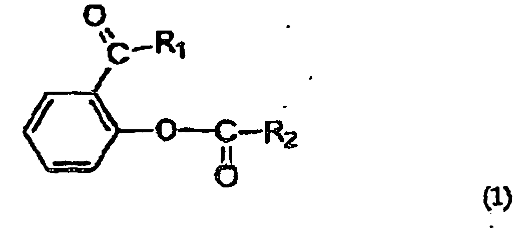
wobei R₁ Phenyl, Phenoxy, Benzyl oder Benzoxy ist; und R₂ eine C₁-C₃₀ Alkylgruppe ist, C₁-C₃₀ Alkoxygruppe, C₆-C₃₀ Arylgruppe, C₇-C₃₀ Aralkyl- oder C₆-C₃₀ Aryloxygruppe,
wobei das terminale Blockmittel dem Polycarbonatoligomer in einer stöchiometrischen Menge von etwa 0,1 bis 6,5 zugegeben wird relativ zu den freien OH, und wobei das terminale Blockmittel dem Polycar-bonat in einer stöchiometrischen Menge von 0,1 bis 1,5 zugegeben wird relativ zum Gehalt an freien OH des Polycarbonatoligomers, und wobei wenigstens 80 Gew.-% des gesamten Gehalts des terminalen Blockmittels der Mischung zugefügt wird nachdem das Polycarbonatoligomer ein Zahlenmittel des Molekulargewichts von etwa 2.500 bis 15.000 Dalton erreicht hat.

7. Verfahren nach Anspruch 1, **dadurch gekennzeichnet, dass** das terminale Blockmittel dem Polycarbonat in einem Reaktorsystem der kontinuierlichen oder halbkontinuierlichen Art zugefügt wird.

8. Verfahren nach Anspruch 7, **dadurch gekennzeichnet, dass** das Reaktorsystem aus zwei oder mehr Reaktoren in Serie besteht.

9. Verfahren nach Anspruch 7, **dadurch gekennzeichnet, dass** das terminale Blockmittel dem Polycarbonat unter Einsatz eines statischen Mischers zugefügt wird.

10. Verfahren nach Anspruch 1, **dadurch gekennzeichnet, dass** das terminale Blockmittel dem Polycarbonat zusammen mit wenigstens einem basischen Katalysator zugefügt wird.
